# EUROPEAN PATENT SPECIFICATION

(11) **EP 2 521 081 B1**
(45) Date of publication and mention of the grant of the patent: **22.06.2016**
(21) Application number: 12166532.7
(22) Date of filing: 03.05.2012
(51) Int. Cl.: G06Q 20/38, G06Q 20/12, G06Q 20/42, G06Q 20/32, G06Q 20/34

(54) **Mobile transaction method and portable electronics device for mobile transaction**
Mobiles Transaktionsverfahren und tragbare Elektronikvorrichtung für mobile Transaktion
Procédé de transaction mobile et dispositif électronique portable pour transaction mobile

(30) Priority: 04.05.2011 TW 100115595
(43) Date of publication of application: 07.11.2012
(73) Proprietor: Yang, Chien-Kang, Taipei City 10682 (TW)
(72) Inventor: Yang, Chien-Kang, Taipei City 10682 (TW)
(74) Representative: Robson, Aidan John

(56) References cited:
- EP-A1- 2 182 457
- WO-A1-2010/032216
- WO-A2-2010/128442
- US-A1- 2010 063 893

## Description

The invention relates to a mobile transaction method, more particularly to a mobile transaction method to be implemented using a portable electronic device.

Point-of-sale (POS) systems are commonly used in retail trade, food industry and hotels, and are capable of handling sales, managing inventory, analyzing customer purchasing behavior, etc.

For a business applying the POS system, customers are allowed to make purchases with a payment card (such as a stored-value card, a debit card, or a credit card) at a sales point of this business that is provided with a card reader capable of reading the payment card. However, the transactions and the payment still have to be processed at specific sales points provided with the card reader, and may be inconvenient for some customers. Document US 2010/063893 A1 discloses a mobile computing device comprising a memory storing secure element data associated with credit card information.

Therefore, the object of the present invention is to provide a mobile transaction method for processing a transaction without time and space limitations.

Accordingly, there is provided a mobile transaction method according to independent claim 1.

Another object of the present invention is to provide a portable electronic device operable to implement the mobile transaction method.

Accordingly, there is provided a portable electronic device according to independent clam 11.

Other features and advantages of the present invention will become apparent in the following detailed description of the preferred embodiment with reference to the accompanying drawings, of which:
Figure 1 is a block diagram of a preferred embodiment of a portable electronic device for mobile transaction according to this invention;
Figure 2 is a block diagram illustrating a relationship among the portable electronic device, an electronic transaction platform, a banking system, and an electronic device associated with a seller;
Figure 3 is a flow chart of a preferred embodiment of a mobile transaction method according to the present invention;
Figure 4 is a flow chart illustrating sub-steps for obtaining payment account information from a payment card; and
Figure 5 is a flow chart illustrating sub-steps for generating a message authentication code.

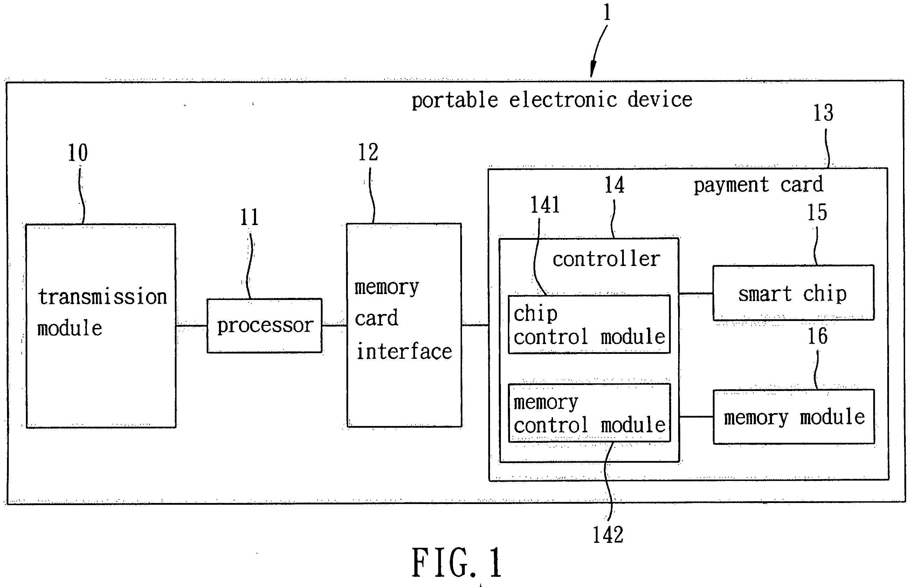

As shown in Figure 1, the preferred embodiment of a portable electronic device 1 according to the present invention includes a transmission module 10, a processor 11 coupled to the transmission module 10, and a memory card interface 12 coupled to the processor 11 and removably coupled to a payment card 13. In this embodiment, the portable electronic device 1 can be a mobile phone capable of communicating with other devices through the transmission module 10. The memory card interface 12 can be an interface compatible with various existing memory cards, such as a secure digital (SD) card, a microSD card, a miniSD card, a compact flash (CF) card, etc.

The payment card 13 includes a controller 14, a smart chip 15 coupled to the controller 14 , and a memory module 16 coupled to the controller 14. The controller 14 includes a chip control module 141 for accessing the smart chip 15, and a memory control module 142 for accessing the memory module 16. It is worth noting that the payment card 13 is removably coupled to the portable electronic device 1 through the memory card interface 12 which is built in the portable electronic device 1, and thus there is no additional hardware cost for the portable electronic device 1.

In this embodiment, the smart chip 15 of the payment card 13 and transmission protocols between the controller 14 and the smart chip 15 conform with an international standard ISO/IEC 7816, which is managed jointly by the International Organization for Standardization (ISO) and the International Electrotechnical Commission (IEC). Specifically, the smart chip 15 is standardized and issued by Finance Information Service Co., LTD. The memory module 16 is a non-volatile memory, such as a flash memory.

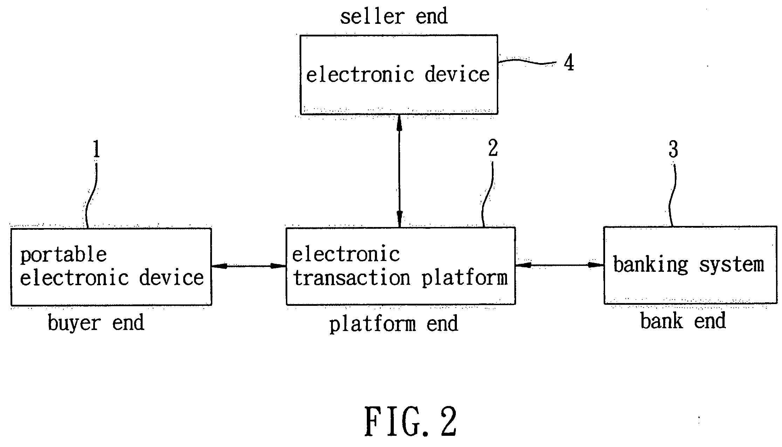

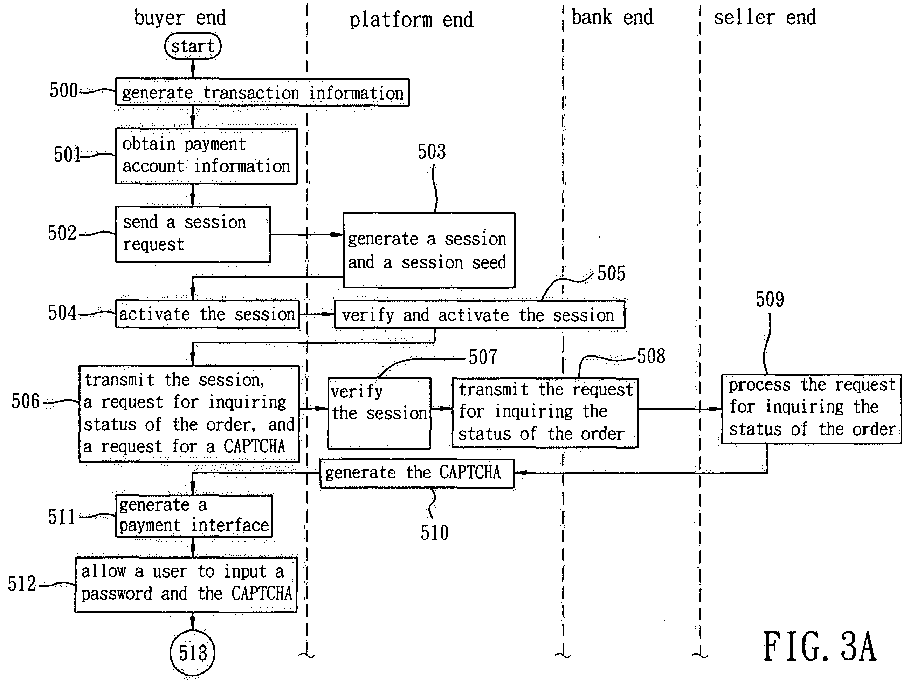

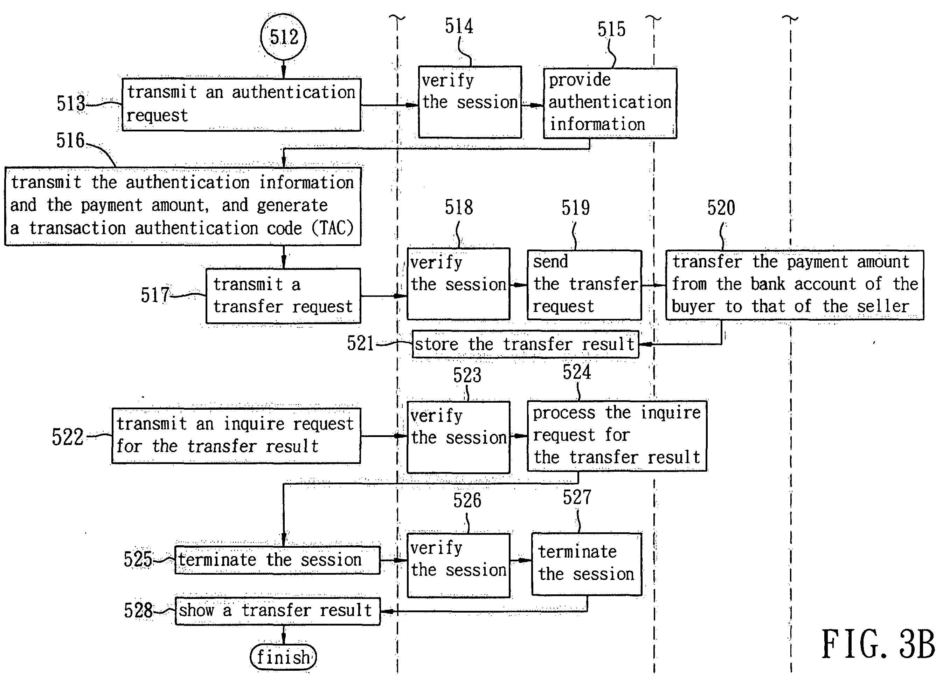

Further referring to Figures 2 and 3, a mobile transaction method is to be implemented using the portable electronic device 1 for processing a transaction with a seller through an electronic transaction platform 2 and a banking system 3 associated with a bank. The portable electronic device 1, the banking system 3, and an electronic device 4 associated with the seller are configured to communicate separately with the electronic transaction platform 2. In this embodiment, the payment card 13 is cooperatively issued by the electronic transaction platform 2 and the bank, and is specific to the bank such that payments from the payment card 13 can be accepted by the bank. The seller is recognized by the electronic transaction platform 2 to provide merchandise or services therethrough, and a user of the portable electronic device 1 is a potential buyer.

Before the mobile transaction can take place, an application program (AP) that is related to the payment card 13, and an application program interface (API) that was developed based on the AP are required to be installed in the operating system (OS) of the portable electronic device 1 in advance. The AP is operable to provide the following functions:
identifying the payment card 13 that is coupled to the memory card interface 12 of the portable electronic device 1;
initializing parameters of the payment card 13;
releasing memory space used for initialization of the payment card 13;
establishing/terminating a communication link between the processor 11 of the portable electronic device 1 and the smart chip 15 of the payment card 13;
starting/terminating a transaction function with the smart chip 15 of the payment card 13, where a new transaction function can be started only after all other transaction functions are terminated;
after starting the transaction function, executing the commands associated with the started transaction function, such as obtaining information from the payment card 13, processing message authentication code (MAC), generating transaction authentication code (TAC), encrypting/decrypting message, etc.;
resetting the controller 14 of the payment card 13;
obtaining an identification number of the memory module 16, e.g., Flash ID; and
obtaining the version information of the API package.

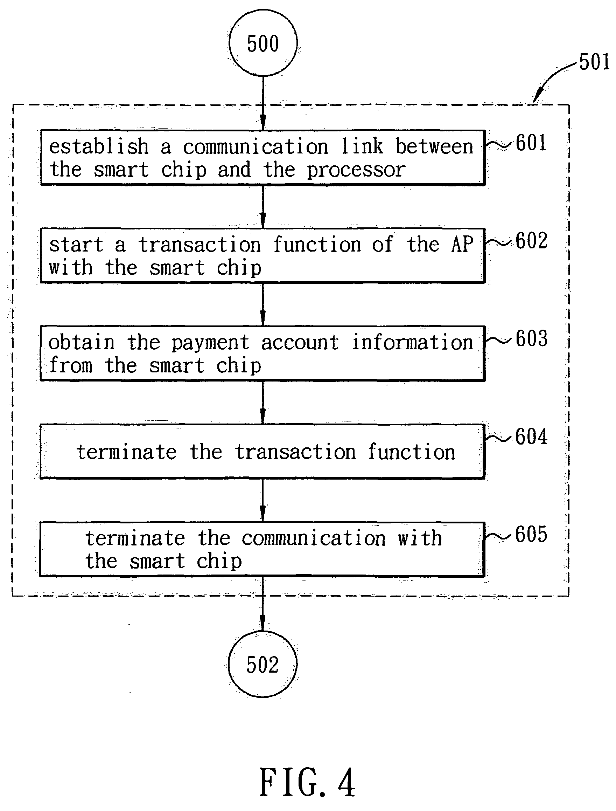

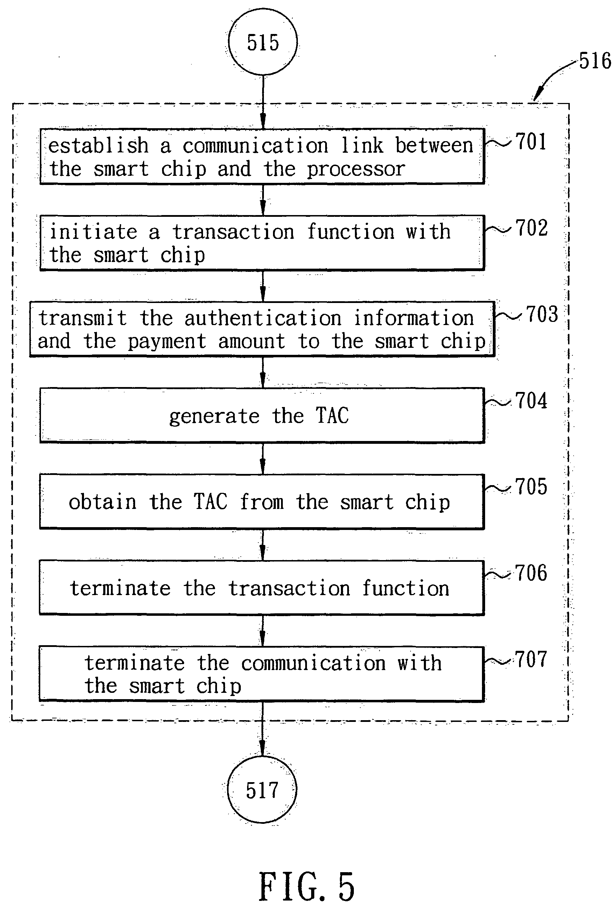

In this embodiment, the portable electronic device 1, which has been installed with the AP and the API, is operable to display an icon that links to the electronic transaction platform 2 on a display (not shown in the Figures) of the portable electronic device 1. When the icon is clicked, the user of the portable electronic device 1 may select a desired merchandise or service provided by various sellers through the electronic transaction platform 2. After the selection is finished, a transaction signal, which is generated by an input device (not shown) of the portable electronic device 1 in response to operation of the user for the selection, is transmitted to the processor 11 of the portable electronic device 1, and the portable electronic device 1 is operable to execute the mobile transaction method of this invention to complete the transaction. The mobile transaction method will now be described with further reference to Figures 3 to 5.

In step 500, the processor 11 of the portable electronic device 1 is operable to receive the transaction signal, and to generate transaction information related to the transaction according to the transaction signal. In this embodiment, the transaction information includes a serial number of an order for the transaction, date and time of the transaction, and a payment amount of the order for the transaction.

In step 501, the processor 11 of the portable electronic device 1 is operable to obtain payment account information from the payment card 13. In this embodiment, the payment account information is stored in the smart chip 15 of the payment card 13, and includes an identification number associated with the payment card 13, a bank account number at the bank issuing the payment card 13, and a bank code associated with the bank. In particular, step 501 includes the following sub-steps 601 to 605.

In sub-step 601, the processor 11 of the portable electronic device 1 is operable to communicate with the smart chip 15 of the payment card 13. In particular, the processor 11 is operable to establish a communication link between the smart chip 15 of the payment card 13 and the AP executed by the processor 11.

In sub-step 602, the processor 11 of the portable electronic device 1 is operable to start a transaction function of the AP with the smart chip 15 of the payment card 13.

In sub-step 603, the processor 11 of the portable electronic device 1 is operable to cooperate with the controller 14 of the payment card 13 so as to obtain the payment account information from the smart chip 15 through the memory card interface 12.

The processor 11 of the portable electronic device 1 is operable to terminate the transaction function in sub-step 604, and to terminate the communication with the smart chip 15 of the payment card 13 in sub-step 605. After obtaining the payment account information, the flow goes to step 502.

In step 502, the processor 11 of the portable electronic device 1 is operable to send a session request to the electronic transaction platform 2 via the transmission module 10, in order to establish a session with the electronic transaction platform 2. The session is used for securing data transmission, including the transaction information and the payment account information, between the portable electronic device 1 and the electronic transaction platform 2 during the mobile transaction. Since control and management of the session are readily appreciated by those skilled in the art, and details thereof are omitted herein for the sake of brevity.

In step 503, the electronic transaction platform 2 is operable to generate a session and a session seed that is encrypted and authenticated, and to transmit the session and the session seed to the portable electronic device 1 in response to the session request from the portable electronic device 1. The session means parameters, variables and data used in the session.

In step 504, the processor 11 of the portable electronic device 1 is operable to activate the session with the electronic transaction platform 2 by transmitting the session back to the electronic transaction platform 2 through the transmission module 10.

In step 505, the electronic transaction platform 2 is operable to verify and activate the session with the portable electronic device 1, and to accordingly transmit a successful result of activation of the session to the portable electronic device 1 when the session is successfully established therebetween.

In step 506, after receiving the successful result of the activation of the session, the processor 11 of the portable electronic device 1 is operable to transmit through the transmission module 10 the session along with a request for inquiring status of the order of the transaction and a request for asking an Completely Automated Public Turing test to tell Computers and Humans Apart (CAPTCHA) to the electronic transaction platform 2. In this embodiment, the request for inquiring the status of the order includes the transaction information, and the CAPTCHA is used for ensuring that the transaction signal is generated by a real person. Additionally, the processor 11 of the portable electronic device 1 is operable to communicate with the electronic transaction platform 2 according to the session thus established before the payment for the order of the transaction is completed.

The electronic transaction platform 2 is operable to verify the session in step 507, and to transmit the request for inquiring the status of the order to the electronic device 4 associated with the seller providing the order to the user in step 508.

In step 509, the electronic device 4 is operable to process the request for inquiring the status of the order, and to accordingly transmit a status of the order to the electronic transaction platform 2.

In step 510, the electronic transaction platform 2 is operable to generate the CAPTCHA, and transmits the CAPTCHA along with the status of the order to the portable electronic device 1.

In step 511, the processor 11 of the portable electronic device 1 is operable to generate an image to ask the user to make payment for the order of the transaction, and to show the user the image and the CAPTCHA on the display of the portable electronic device 1.

In step 512, the processor 11 of the portable electronic device 1 is operable to allow the user to input the CAPTCHA and a password associated with the payment card 13.

When it is verified that the password is authentic and the CAPTCHA is correct, the processor 11 of the portable electronic device 1 is operable, in step 513, to transmit an authentication request along with the session to the electronic transaction platform 2 through the transmission module 10. In this embodiment, the portable electronic device 1 and the electronic transaction platform 2 are configured to identify the transaction with each other according to the authentication information.

In response to receipt of the authentication request from the portable electronic device 1, the electronic transaction platform 2 is operable to verify the session in step 514, and to provide authentication information to the portable electronic device 1 in step 515 when the verification in step 514 is successful. The authentication information includes a terminal serial number, a terminal check number, a date and time of the authentication, a bank account number associated with the seller for receiving the payment, a bank code of a bank of the bank account number for receiving the payment, a transaction serial number corresponding to the transaction, and a payment request identification number that is generated by the electronic transaction platform 2 in response to the authentication request. The payment request identification number is associated with the portable electronic device 1, and is for the portable electronic device 1 and the electronic transaction platform 2 to confirm details of the payment with each other.

In step 516, the processor 11 of the portable electronic device 1 is operable to communicate with the smart chip 15 of the payment card 13, and to start a transaction function of the AP. In this transaction function, the authentication information and the payment amount are transmitted to the smart chip 15 through the memory card interface 12 and the chip control module 141, the smart chip 15 is operable to generate a TAC accordingly, and the processor 11 is operable to cooperate with the chip control module 141 so as to obtain the message authentication code through the memory card interface 12.

Specifically, step 516 includes the following sub-steps 701 to 707.

In sub-step 701, the processor 11 of the portable electronic device 1 is operable to establish a communication link between the smart chip 15 of the payment card 13 and the AP executed by the processor 11.

In sub-step 702, the processor 11 of the portable electronic device 1 is operable to initiate the transaction function with the smart chip 15 of the payment card 13 via the AP of the processor 11.

In sub-step 703, the processor 11 of the portable electronic device 1 is operable to cooperate with the chip control module 141 to transmit the authentication information and the payment amount to the smart chip 15 through the memory card interface 12.

In sub-step 704, the smart chip 15 is operable to generate the TAC. Since the techniques related to the message authentication code are well known to those skilled in art, details thereof are omitted herein for the sake of brevity.

In sub-step 705, the processor 11 of the portable electronic device 1 is operable to cooperate with the chip control module 141 so as to obtain the TAC from the smart chip 15 through the memory card interface 12.

Then, the processor 11 of the portable electronic device 1 is operable to terminate the transaction function in sub-step 706, and to terminate the communication with the smart chip 15 of the payment card 13 in sub-step 707. The flow subsequently goes to step 517.

In step 517, the processor 11 of the portable electronic device 1 is operable to transmit a transfer request along with a session to the electronic transaction platform 2 through the transmission module 10. In this embodiment, the transfer request includes the transaction information, the payment account information, the CAPTCHA, the bank account number for receiving the payment, the bank code of the bank of the bank account number for receiving the payment, the payment request identification number, and the message authentication code.

In step 518, the electronic transaction platform 2 is operable to verify the session received in step 517. In step 519, the electronic transaction platform 2 is operable to send the transfer request to the banking system 3 so as to notify the banking system 3 to process the payment for the order of the transaction.

In step 520, the banking system 3 is operable to process the payment according to the transfer request (i.e., to transfer the payment amount from the bank account of the buyer to that of the seller), and to generate a transfer result that is to be transmitted to the electric transaction platform 2 thereafter. The transfer result includes a payment serial number, a receipt number and a receipt status related to the payment thus processed.

In step 521, the electronic transaction platform 2 is operable to receive and store the transfer result.

In step 522, the processor 11 of the portable electronic device 1 is operable to transmit an inquire request for the transfer result, along with a session to the electronic transaction platform 2 through the transmission module 10.

In step 523, the electronic transaction platform 2 is operable to verify the session received in step 522. In step 524, the electronic transaction platform 2 is operable to process the inquire request, and to transmit the transfer result to the processor 11 of the portable electronic device 1. In this embodiment, the processor 11 of the portable electronic device 1 is operable to determine whether a predetermined waiting time has elapsed, i.e., to determine whether the electronic transaction platform 2 has timed-out. When the processer 11 receives the transfer result within the predetermined waiting time, the flow goes to step 525. Otherwise, the processor 11 of the portable electronic device 1 is operable to show a message notifying that the payment for the order has not yet been completed on the display of the portable electronic device 1.

The payment process for the order of the transaction is considered to have been successfully completed when the portable electronic device 1 receives the transfer result. Then, the portable electronic device 1 is operable to terminate the session with the electronic transaction platform 2, and to transmit a session for terminating the session to the electronic transaction platform 2 via the transmission module 10.

In step 526, the electronic transaction platform 2 is operable to verify the session received in step 525. In step 527, the electronic transaction platform 2 is operable to terminate the session with the portable electronic device 1.

In step 528, the processor 11 of the portable electronic device 1 is operable to show the transfer result on the display of the portable electronic device 1.

To sum up, the portable electronic device 1 is operable to cooperate with the payment card 13, and to implement the mobile transaction method without time and space limitations so as to facilitate the purchasing behavior of the user. In other words, the chip control module 141 of the controller 14 can be considered as a card reader for the smart chip 15, and is configured to handle functions of a terminal device (e.g., a credit card reader) that is for payment processing in a point-of-sale system. Additionally, the data transmission between the portable electronic device 1 and the electronic transaction platform 2 is secured by the session and session seed that is encrypted during the transaction.

## Claims

1. A mobile transaction method to be implemented using a portable electronic device (1) for processing a transaction through an electronic transaction platform (2), the portable electronic device (1) being removably coupled to a payment card (13) that stores payment account information,
the portable electronic device (1) including a processor (11) and a memory card interface (12) that is coupled to the processor (11) and that is operable to connect to the payment card (13), the payment card (13) including a smart chip (15) and a controller (14) for the smart chip (15), the method including the following steps of:
A) configuring the portable electronic device (1) to generate transaction information related to the transaction;
B) configuring the portable electronic device (1) to obtain the payment account information from the payment card (13);
C) configuring the portable electronic device (1) to establish a session with the electronic transaction platform (2), to receive parameters, variables and data used in the session from the electronic transaction platform (2), and to communicate with the electronic transaction platform (2) according to the session; and
D) configuring the portable electronic device (1) to collaborate with the electronic transaction platform (2) to process payment for the transaction according to the transaction information generated in step A) and the payment account information obtained in step B);
**characterized in that** step D) includes the following sub-steps of:
D1) configuring the processor (11) of the portable electronic device (1) to transmit an authentication request to the electronic transaction platform (2), so that the electronic transaction platform (2) is operable to provide authentication information to the portable electronic device (1) in response to receipt of the authentication request from the portable electronic device (1), the portable electronic device (1) and the electronic transaction platform (2) being configured to identify the transaction with each other according to the authentication information;
D2) configuring the processor (11) of the portable electronic device (1) to cooperate with the controller (14) of the payment card (13) to transmit the authentication information and the payment amount to the smart chip (15) through the memory card interface (12) and for generating a transaction authentication code by the controller (14); and
D3) configuring the processor (11) of the portable electronic device (1) to obtain the transaction authentication code from the smart chip (15) through the memory card interface (12).

2. The mobile transaction method as claimed in claim 1, **characterized in that** the payment account information obtained in step B) includes an identification number associated with the payment card (13), a bank account number to which the payment processed in step D) is charged, and a bank code associated with a bank issuing the bank account number.

3. The mobile transaction method as claimed in any one of claims 1 and 2, **characterized in that** the payment card (13) is cooperatively issued by the electronic transaction platform (2) and the bank, and is specific to the bank.

4. The mobile transaction method as claimed in any one of claims 1 to 3, the portable electronic device (1) including a processor (11) and a memory card interface (12) that is coupled to the processor (11) and the payment card (13), the payment card (13) including a smart chip (15) and a controller (14) for the smart chip (15), the mobile transaction method being **characterized in that** step B) includes the following sub-steps of:
B1) configuring the processor (11) of the portable electronic device (1) to communicate with the smart chip (15) of the payment card (13);
B2) configuring the processor (11) of the portable electronic device (1) to start a transaction function with the smart chip (15) of the payment card (13);
B3) configuring the processor (11) of the portable electronic device (1) to cooperate with the controller (14) of the payment card (13) so as to obtain the payment account information from the smart chip (15) through the memory card interface (12);
B4) configuring the processor (11) of the portable electronic device (1) to terminate the transaction function; and
B5) configuring the processor (11) of the portable electronic device (1) to terminate the communication with the smart chip (15) of the payment card (13).

5. The mobile transaction method as claimed in any one of the claims 1 to 4, further **characterized by** the step, after step D), of:
configuring the portable electronic device (1) to terminate the session with the electronic transaction platform (2) when the payment is completed.

6. The mobile transaction method as claimed in any one of claims 4 and 5, **characterized in that** the transaction information includes a payment amount for the transaction.

7. The mobile transaction method as claimed in any one of claims 1 to 6, **characterized in that** step D) further includes the following sub-steps of:
before sub-step D2), configuring the processor (11) of the portable electronic device (1) to communicate with the smart chip (15) of the payment card (13), and to initiate a transaction function with the smart chip (15) of the payment card (13); and
after sub-step D3), configuring the processor (11) of the portable electronic device (1) to terminate the transaction function the communication with the smart chip (15) of the payment card (13), and to terminate the communication with the smart chip (15) of the payment card (13).

8. The mobile transaction method as claimed in any one of claims 1 to 7, **characterized in that**, in sub-step D2), the authentication information includes a terminal serial number, a terminal check number, a date and time of the authentication, a bank account number for receiving the payment, a bank code associated with a bank of the bank account number for receiving the payment, and a transaction serial number.

9. The mobile transaction method as claimed in any one of claims 1 to 8, **characterized in that** the payment card (13) is issued by a bank associated with a banking system, and step D), after sub-step D3), further includes the sub-step of:
configuring the processor (11) of the portable electronic device (1) to transmit a transfer request to the electronic transaction platform (2) so that the electronic transaction platform (2) is operable, in response to receipt of the transfer request, to notify the banking system of the bank to process the payment according to the transfer request, the transfer request including the transaction information, the payment account information, and the message authentication code.

10. The mobile transaction method as claimed in claim 9, **characterized in that** step D), after the sub-step of transmitting the transfer request, further includes the sub-steps of:
configuring the processor (11) of the portable electronic device (1) to transmit an inquire request to the electronic transaction platform (2), so that the electronic transaction platform (2) is operable, in response to receipt to the inquire request, to transmit to the processor (11) of the portable electronic device (1) a transfer result that is generated by the banking system after the payment is processed, that is received by the electronic transaction platform (2) from the banking system, and that includes a payment serial number, a receipt number and a receipt status related to the payment thus processed.

11. A portable electronic device (1) configured to cooperatively communicate with an electronic transaction platform (2) for processing a transaction through the electronic transaction platform (2), said portable electronic device (1) including:
a memory card interface (12) configured to be removably coupled to a payment card (13) that includes a smart chip (15) storing payment account information and a controller (14) for accessing said smart chip (15); and
a processor (11) coupled to said memory card interface (12) and configured to
generate transaction information according to the transaction,
cooperate with the controller (14) of the payment card (13) so as to obtain the payment account information from the smart chip (15) through the memory card interface (12),
establish a session with the electronic transaction platform (2), receive parameters, variables and data used in the session from the electronic transaction platform (2), and communicate with the electronic transaction platform (2) according to the session,
cooperate with the electronic transaction platform (2) to process payment for the transaction according to the transaction information and the payment account information, and
terminate the session with the electronic transaction platform (2) when the payment is completed;
**characterized in that**, in cooperating with the electronic transaction platform (2) to process payment for the transaction, said processor (11) of the portable electronic device (1) is configured to:
transmit an authentication request to the electronic transaction platform (2), so that the electronic transaction platform (2) is operable to provide authentication information to the portable electronic device (1) in response to receipt of the authentication request from the portable electronic device (1), the portable electronic device (1) and the electronic transaction platform (2) being configured to identify the transaction with each other according to the authentication information;
cooperate with the controller (14) of the payment card (13) to transmit the authentication information and the payment amount to the smart chip (15) through the memory card interface (12) and for generating a transaction authentication code by the controller (14); and
obtain the transaction authentication code from the smart chip (15) through the memory card interface (12).

## Patentansprüche

1. Mobiles Transaktionsverfahren, zu implementieren mit einem tragbaren elektronischen Gerät (1) zum Verarbeiten einer Transaktion durch eine elektronische Transaktionsplattform (2), wobei das tragbare elektronische Gerät (1) entfernbar mit einer Zahlungskarte (13) gekoppelt ist, die Zahlungskontoinformationen speichert,
wobei das tragbare elektronische Gerät (1) einen Prozessor (11) und eine Speicherkartenschnittstelle (12) aufweist, die mit dem Prozessor (11) gekoppelt ist und zum Verbinden mit der Zahlungskarte (13) dient, wobei die Zahlungskarte (13) einen Smart-Chip (15) und einen Controller (14) für den Smart-Chip (15) beinhaltet, wobei das Verfahren die folgenden Schritte beinhaltet:
A) Konfigurieren des tragbaren elektronischen Geräts (1) zum Erzeugen von Transaktionsinformationen in Bezug auf die Transaktion;
B) Konfigurieren des tragbaren elektronischen Geräts (1) zum Einholen der Zahlungskontoinformationen von der Zahlungskarte (13);
C) Konfigurieren des tragbaren elektronischen Geräts (1) zum Einrichten einer Sitzung mit der elektronischen Transaktionsplattform (2), um bei der Sitzung benutzte Parameter, Variablen und Daten von der elektronischen Transaktionsplattform (2) zu empfangen und mit der elektronischen Transaktionsplattform (2) gemäß der Sitzung zu kommunizieren; und
D) Konfigurieren des tragbaren elektronischen Geräts (1) zum Zusammenarbeiten mit der elektronischen Transaktionsplattform (2) zum Verarbeiten von Zahlung für die Transaktion gemäß den in Schritt A) erzeugten Transaktionsinformationen und den in Schritt B) erhaltenen Zahlungskontoinformationen;
**dadurch gekennzeichnet, dass** Schritt D) die folgenden Teilschritte beinhaltet:
D1) Konfigurieren des Prozessors (11) des tragbaren elektronischen Geräts (1) zum Senden einer Authentifikationsanforderung zu der elektronischen Transaktionsplattform (2), so dass die elektronische Transaktionsplattform (2) dem tragbaren elektronischen Gerät (1) als Reaktion auf den Empfang der Authentifikationsanforderung von dem tragbaren elektronischen Gerät (1) Authentifikationsinformationen bereitstellt, wobei das tragbare elektronische Gerät (1) und die elektronische Transaktionsplattform (2) zum Identifizieren der Transaktion miteinander gemäß den Authentifikationsinformationen konfiguriert sind;
D2) Konfigurieren des Prozessors (11) des tragbaren elektronischen Geräts (1) zum Zusammenwirken mit dem Controller (14) der Zahlungskarte (13), um die Authentifikationsinformationen und den Zahlungsbetrag zu dem Smart-Chip (15) durch die Speicherkartenschnittstelle (12) zu senden und einen Transaktionsauthentifikationscode durch den Controller (14)zu erzeugen; und
D3) Konfigurieren des Prozessors (11) des tragbaren elektronischen Geräts (1) zum Einholen des Transaktionsauthentifikationscode von dem Smart-Chip (15) durch die Speicherkartenschnittstelle (12).

2. Mobiles Transaktionsverfahren nach Anspruch 1, **dadurch gekennzeichnet, dass** die in Schritt B) eingeholten Zahlungskontoinformationen eine mit der Zahlungskarte (13) assoziierte Identifikationsnummer, eine Bankkontonummer, die mit der in Schritt D) verarbeiteten Zahlung belastet wird, und ein Bankkonto in Verbindung mit einer Bank beinhalten, die die Bankkontonummer ausgegeben hat.

3. Mobiles Transaktionsverfahren nach einem der Ansprüche 1 und 2, **dadurch gekennzeichnet, dass** die Zahlungskarte (13) zusammenwirkend von der elektronischen Transaktionsplattform (2) und der Bank ausgegeben wird und für die Bank spezifisch ist.

4. Mobiles Transaktionsverfahren nach einem der Ansprüche 1 bis, wobei das tragbare elektronische Gerät (1) einen Prozessor (11) und eine Speicherkartenschnittstelle (12) beinhaltet, die mit dem Prozessor (11) und der Zahlungskarte (13) gekoppelt ist, wobei die Zahlungskarte (13) einen Smart-Chip (15) und einen Controller (14) für den Smart-Chip (15) aufweist, wobei das mobile Transaktionsverfahren **dadurch gekennzeichnet ist, dass** Schritt B) die folgenden Teilschritte beinhaltet:
B1) Konfigurieren des Prozessors (11) des tragbaren elektronischen Geräts (1) zum Kommunizieren mit dem Smart-Chip (15) der Zahlungskarte (13);
B2) Konfigurieren des Prozessors (11) des tragbaren elektronischen Geräts (1) zum Starten einer Transaktionsfunktion mit dem Smart-Chip (15) der Zahlungskarte (13);
B3) Konfigurieren des Prozessors (11) des tragbaren elektronischen Geräts (1) zum Zusammenwirken mit dem Controller (14) der Zahlungskarte (13), um die Zahlungskontoinformationen von dem Smart-Chip (15) durch die Speicherkartenschnittstelle (12) einzuholen;
B4) Konfigurieren des Prozessors (11) des tragbaren elektronischen Geräts (1) zum Terminieren der Transaktionsfunktion; und
B5) Konfigurieren des Prozessors (11) des tragbaren elektronischen Geräts (1) zum Terminieren der Kommunikation mit dem Smart-Chip (15) der Zahlungskarte (13).

5. Mobiles Transaktionsverfahren nach einem der Ansprüche 1 bis 4, das ferner durch den folgenden Schritt, nach Schritt D), gekennzeichnet ist:
Konfigurieren des tragbaren elektronischen Geräts (1) zum Terminieren der Sitzung mit der elektronischen Transaktionsplattform (2), wenn die Zahlung abgeschlossen ist.

6. Mobiles Transaktionsverfahren nach einem der Ansprüche 4 und 5, **dadurch gekennzeichnet, dass** die Transaktionsinformationen einen Zahlungsbetrag für die Transaktion beinhalten.

7. Mobiles Transaktionsverfahren nach einem der Ansprüche 1 bis 6, **dadurch gekennzeichnet, dass** Schritt D) die folgenden Teilschritte beinhaltet:
Konfigurieren, vor Teilschritt D2), des Prozessors (11) des tragbaren elektronischen Geräts (1) zum Kommunizieren mit dem Smart-Chip (15) der Zahlungskarte (13) und zum Einleiten einer Transaktionsfunktion mit dem Smart-Chip (15) der Zahlungskarte (13); und
Konfigurieren, nach Teilschritt D3), des Prozessors (11) des tragbaren elektronischen Geräts (1) zum Terminieren der Transaktionsfunktion der Kommunikation [sic] mit dem Smart-Chip (15) der Zahlungskarte (13) und zum Terminieren der Kommunikation mit dem Smart-Chip (15) der Zahlungskarte (13).

8. Mobiles Transaktionsverfahren nach einem der Ansprüche 1 bis 7, **dadurch gekennzeichnet, dass** in Teilschritt D2) die Authentifikationsinformationen eine Terminal-Seriennummer, eine Terminal-Prüfnummer, Datum und Uhrzeit der Authentifikation, eine Bankkontonummer zum Empfangen der Zahlung, ein Bankkonto in Verbindung mit einer Bank der Bankkontonummer zum Empfangen der Zahlung und eine Transaktionsseriennummer beinhalten.

9. Mobiles Transaktionsverfahren nach einem der Ansprüche 1 bis 8, **dadurch gekennzeichnet, dass** die Zahlungskarte (13) von einer Bank in Verbindung mit einem Bankensystem ausgegeben wird, und Schritt D), nach Teilschritt D3), ferner den folgenden Teilschritt beinhaltet:
Konfigurieren des Prozessors (11) des tragbaren elektronischen Geräts (1) zum Senden einer Übertragungsanforderung zu der elektronischen Transaktionsplattform (2), so dass die elektronische Transaktionsplattform (2) als Reaktion auf den Empfang der Übertragungsanforderung das Bankensystem der Bank anweist, die Zahlung gemäß der Übertragungsanforderung zu verarbeiten, wobei die Übetragungsanforderung die Transaktionsinformationen, die Zahlungskontoinformationen und den Nachrichtenauthentifikationscode beinhaltet.

10. Mobiles Transaktionsverfahren nach Anspruch 9, **dadurch gekennzeichnet, dass** Schritt D), nach dem Teilschritt des Sendens der Übertragungsanforderung, ferner die folgenden Teilschritte beinhaltet:
Konfigurieren des Prozessors (11) des tragbaren elektronischen Geräts (1) zum Senden einer Anfrageanforderung zu der elektronischen Transaktionsplattform (2), so dass die elektronische Transaktionsplattform (2) als Reaktion auf den Empfang der Anfrageanforderung zu dem Prozessor (11) des tragbaren elektronischen Gerätes (1) ein Übertragungsergebnis senden kann, das vom Bankensystem nach der Verarbeitung der Zahlung erzeugt wird, das von der elektronischen Transaktionsplattform (2) vom Bankensystem empfangen wird und das eine Zahlungsseriennummer, eine Empfangsnummer und einen Empfangsstatus in Bezug auf die so verarbeitete Zahlung beinhaltet.

11. Tragbares elektronisches Gerät (1), konfiguriert zum zusammenwirkenden Kommunizieren mit einer elektronischen Transaktionsplattform (2) zum Verarbeiten einer Transaktion durch die elektronische Transaktionsplattform (2), wobei das genannte tragbare elektronische Gerät (1) Folgendes beinhaltet:
eine Speicherkartenschnittstelle (12), konfiguriert zum entfernbaren Koppeln mit einer Zahlungskarte (13), die einen Zahlungskontoinformationen speichernden Smart-Chip (15) aufweist, und einem Controller (14) zum Zugreifen auf den genannten Smart-Chip (15); und
einen Prozessor (11), der mit der genannten Speicherkartenschnittstelle (12) gekoppelt und konfiguriert ist zum:
Erzeugen von Transaktionsinformationen gemäß der Transaktion,
Zusammenwirken mit dem Controller (14) der Zahlungskarte (13), um die Zahlungskontoinformationen von dem Smart-Chip (15) durch die Speicherkartenschnittstelle (12) einzuholen,
Einrichten einer Sitzung mit der elektronischen Transaktionsplattform (2), Empfangen von in der Sitzung benutzten Parametern, Variablen und Daten von der elektronischen Transaktionsplttform (2) und Kommunizieren mit der elektronischen Transaktionsplattform (2) gemäß der Sitzung,
Zusammenwirken mit der elektronischen Transaktionsplattform (2) zum Verarbeiten von Zahlungen für die Transaktion gemäß den Transaktionsinformationen und den Zahlungskontoinformationen, und
Terminieren der Sitzung mit der elektronischen Transaktionsplattform (2), wenn die Zahlung abgeschlossen ist;
**dadurch gekennzeichnet, dass** beim Zusammenwirken mit der elektronischen Transaktionsplattform (2) zum Verarbeiten von Zahlung für die Transaktion der genannte Prozessor (11) des tragbaren elektronischen Geräts (1) konfiguriert ist zum:
Senden einer Authentifikationsanforderung zu der elektronischen Transaktionsplattform (2), so dass die elektronische Transaktionsplattform (2) Authentifikationsinformationen zum tragbaren elektronischen Gerät (1) als Reaktion auf den Empfang der Authentifikationsanforderung von dem tragbaren elektronischen Gerät (1) bereitstellt, wobei das tragbare elektronische Gerät (1) und die elektronische Transaktionsplattform (2) zum Identifizieren der Transaktion miteinander gemäß den Authentifikationsinformationen konfiguriert ist;
Zusammenwirken mit dem Controller (14) der Zahlungskarte (13) zum Senden der Authentifikationsinformationen und des Zahlungsbetrags zu dem Smart-Chip (15) durch die Speicherkartenschnittstelle (12) und zum Erzeugen eines Transaktionsauthentifikationscode durch den Controller (14); und
Einholen des Transaktionsauthentifikationscode von dem Smart-Chip (15) durch die Speicherkartenschnittstelle (12).

## Revendications

1. Procédé de transaction mobile destiné à être mis en oeuvre en utilisant un dispositif électronique portable (1) pour traiter une transaction par le biais d'une plate-forme de transactions électroniques (2), le dispositif électronique portable (1) étant couplé de manière amovible à une carte de paiement (13) qui mémorise des informations de compte de paiement,
le dispositif électronique portable (1) comportant un processeur (11) et une interface de carte mémoire (12) qui est couplée au processeur (11) et qui est exploitable pour être connectée à la carte de paiement (13), la carte de paiement (13) comportant une puce intelligente (15) et un contrôleur (14) de la puce intelligente (15), le procédé comportant les étapes suivantes consistant à :
A) configurer le dispositif électronique portable (1) pour générer des informations de transaction relatives à la transaction ;
B) configurer le dispositif électronique portable (1) pour obtenir les informations de compte de paiement à partir de la carte de paiement (13) ;
C) configurer le dispositif électronique portable (1) pour établir une session avec la plate-forme de transactions électroniques (2), afin de recevoir des paramètres, variables et données utilisées dans la session depuis la plate-forme de transactions électroniques (2), et communiquer avec la plate-forme de transactions électroniques (2) conformément à la session ; et
D) configurer le dispositif électronique portable (1) pour collaborer avec la plate-forme de transaction électronique (2) pour traiter le paiement de la transaction conformément aux informations de transaction générées à l'étape A) et aux informations de compte de paiement obtenues à l'étape B) ;
**caractérisé en ce que** l'étape D) comporte les sous-étapes suivantes consistant à :
D1) configurer le processeur (11) du dispositif électronique portable (1) pour transmettre une requête d'authentification à la plate-forme de transactions électroniques (2), de telle sorte que la plate-forme de transactions électroniques (2) soit exploitable pour fournir des informations d'authentification au dispositif électronique portable (1) en réponse à la réception de la requête d'authentification depuis le dispositif électronique portable (1), le dispositif électronique portable (1) et la plate-forme de transactions électroniques (2) étant configurés pour identifier mutuellement la transaction conformément aux informations d'authentification ;
D2) configurer le processeur (11) du dispositif électronique portable (1) pour coopérer avec le contrôleur (14) de la carte de paiement (13) pour transmettre les informations d'authentification et le montant du paiement à la puce intelligente (15) par le biais de l'interface de carte mémoire (12) et pour générer un code d'authentification de transaction par le contrôleur (14) ; et
D3) configurer le processeur (11) du dispositif électronique portable (1) pour obtenir le code d'authentification de transaction depuis la puce intelligente (15) par le biais de l'interface de carte mémoire (12).

2. Procédé de transaction mobile selon la revendication 1, **caractérisé en ce que** les informations de compte de paiement obtenues à l'étape B) comportent un numéro d'identification associé à la carte de paiement (13), un numéro de compte bancaire auquel le paiement traité à l'étape D) est imputé, et un code bancaire associé à une banque émettant le numéro de compte bancaire.

3. Procédé de transaction mobile selon l'une quelconque des revendications 1 et 2, **caractérisé en ce que** la carte de paiement (13) est émise en collaboration par la plate-forme de transactions électroniques (2) et la banque, et est spécifique à la banque.

4. Procédé de transaction mobile selon l'une quelconque des revendications 1 à 3, le dispositif électronique portable (1) comportant un processeur (11) et une interface de carte mémoire (12) qui est couplée au processeur (11) et à la carte de paiement (13), la carte de paiement (13) comportant une puce intelligente (15) et un contrôleur (14) de la puce intelligente (15), le procédé de transaction mobile étant **caractérisé en ce que** l'étape B) comporte les sous-étapes suivantes consistant à :
B1) configurer le processeur (11) du dispositif électronique portable (1) pour communiquer avec la puce intelligente (15) de la carte de paiement (13) ;
B2) configurer le processeur (11) du dispositif électronique portable (1) pour lancer une fonction de transaction avec la puce intelligente (15) de la carte de paiement (13) ;
B3) configurer le processeur (11) du dispositif électronique portable (1) pour coopérer avec le contrôleur (14) de la carte de paiement (13) de manière à obtenir les informations de compte de paiement à partir de la puce intelligente (15) par le biais de l'interface de carte mémoire (12) ;
B4) configurer le processeur (11) du dispositif électronique portable (1) pour mettre fin à la fonction de transaction ; et
B5) configurer le processeur (11) du dispositif électronique portable (1) pour mettre fin à la communication avec la puce intelligente (15) de la carte de paiement (13).

5. Procédé de transaction mobile, selon l'une quelconque des revendications 1 à 4, **caractérisé en outre par** l'étape après l'étape D), consistant à :
configurer le dispositif électronique portable (1) pour mettre fin à la session avec la plate-forme de transactions électroniques (2) quand le paiement est terminé.

6. Procédé de transaction mobile, selon l'une quelconque des revendications 4 et 5, **caractérisé en ce que** les informations de transaction comportent un montant de paiement pour la transaction.

7. Procédé de transaction mobile, selon l'une quelconque des revendications 1 à 6, **caractérisé en ce que** l'étape D) comporte en outre les sous-étapes suivantes consistant à :
avant la sous-étape D2), configurer le processeur (11) du dispositif électronique portable (1) pour communiquer avec la puce intelligente (15) de la carte de paiement (13), et lancer une fonction de transaction avec la puce intelligente (4) de la carte de paiement (13) ; et
après la sous-étape D3), configurer le processeur (11) du dispositif électronique portable (1) pour mettre fin à la fonction de transaction la communication avec la puce intelligente (15) de la carte de paiement (13), et mettre fin à la communication avec la puce intelligente (15) de la carte de paiement (13).

8. Procédé de transaction mobile, selon l'une quelconque des revendications 1 à 7, **caractérisé en ce que**, à la sous-étape D2), les informations d'authentification comportent un numéro de série de terminal, un numéro de vérification de terminal, une date et une heure de l'authentification, un numéro de compte bancaire pour recevoir le paiement, un code bancaire associé à une banque du numéro de compte bancaire pour recevoir le paiement, un numéro de série de transaction.

9. Procédé de transaction mobile, selon l'une quelconque des revendications 1 à 8, **caractérisé en ce que** la carte de paiement (13) est émise par une banque associée à un système bancaire, et l'étape D), après la sous-étape D3), comporte en outre la sous-étape consistant à :
configurer le processeur (11) du dispositif électronique portable (1) pour transmettre une requête de transfert à la plate-forme de transactions électroniques (2) de telle sorte que la plate-forme de transactions électroniques (2) soit exploitable, en réponse à la réception de la requête de transfert, pour notifier au système bancaire de la banque de traiter le paiement conformément à la requête de transfert, la requête de transfert comportant les informations de transaction, les informations de compte de paiement, et le code d'authentification du message.

10. Procédé de transaction mobile selon la revendication 9, **caractérisé en ce que** l'étape D), après la sous-étape de transmission de la requête de transfert, comporte en outre les sous-étapes consistant à :
configurer le processeur (11) du dispositif électronique portable (1) pour transmettre une requête d'interrogation à la plate-forme de transactions électroniques (2), de telle sorte que la plate-forme de transactions électroniques (2) soit exploitable, en réponse à la réception de la requête d'interrogation, pour transmettre au processeur (11) du dispositif électronique portable (1) un résultat de transfert qui est généré par le système bancaire après le traitement du paiement, lequel est reçu par la plate-forme de transactions électroniques (2) depuis le système bancaire, et comporte un numéro de série de paiement, un numéro de reçu et un état de reçu relatif au paiement ainsi traité.

11. Dispositif électronique portable (1) configuré pour communiquer en collaboration avec une plate-forme de transactions électroniques (2) pour traiter une transaction par le biais de la plate-forme de transactions électroniques (2), ledit dispositif électronique portable (1) comportant :
une interface de carte mémoire (12) configurée pour être couplée de manière amovible à une carte de paiement (13) qui comporte une puce intelligente (15) mémorisant des informations de compte de paiement et un contrôleur (14) pour solliciter ladite puce intelligente (15) ; et
un processeur (11) couplé à ladite interface de carte mémoire (12) et configuré pour
générer des informations de transaction conformément à la transaction,
coopérer avec le contrôleur (14) de la carte de paiement (13) de manière à obtenir les informations de compte de paiement à partir de la puce intelligente (15) par le biais de l'interface de carte mémoire (12),
établir une session avec la plate-forme de transactions électroniques (2), recevoir des paramètres, variables et données utilisées dans la session depuis la plate-forme de transactions électroniques (2), et communiquer avec la plate-forme de transactions électroniques (2) conformément à la session ;
collaborer avec la plate-forme de transactions électroniques (2) pour traiter un paiement pour la transaction conformément aux informations de transaction et aux informations de compte de paiement, et
mettre fin à la session avec la plate-forme de transactions électroniques (2) quand le paiement est terminé ;
**caractérisé en ce que**, dans la collaboration avec la plate-forme de transactions électroniques (2) pour traiter le paiement de la transaction, ledit processeur (11) du dispositif électronique portable (1) est configuré pour :
transmettre une requête d'authentification à la plate-forme de transactions électroniques (2), de telle sorte que la plate-forme de transactions électroniques (2) soit exploitable pour fournir des informations d'authentification au dispositif électronique portable (1) en réponse à la réception de la requête d'authentification depuis le dispositif électronique portable (1), le dispositif électronique portable (1) et la plate-forme de transactions électroniques (2) étant configurés pour identifier mutuellement la transaction conformément aux informations d'authentification ;
coopérer avec le contrôleur (14) de la carte de paiement (13) pour transmettre les informations d'authentification et le montant du paiement à la puce intelligente (15) par le biais de l'interface de carte mémoire (12) et pour générer un code d'authentification de transaction par le contrôleur (14) ; et
obtenir le code d'authentification de transaction depuis la puce intelligente (15) par le biais de l'interface de carte mémoire (12).
